# EUROPÄISCHE PATENTSCHRIFT

(11) **EP 2 412 336 B1**
(45) Veröffentlichungstag und Bekanntmachung des Hinweises auf die Patenterteilung: **07.08.2013**
(21) Anmeldenummer: 11405277.2
(22) Anmeldetag: 08.07.2011
(51) Int. Cl.: A61C 8/00

(54) **Hilfsteil für die Herstellung von Zahnersatz**
Aid for producing dentures
Pièce dentaire auxiliaire pour la fabrication de prothèses dentaires

(30) Priorität: 29.07.2010 CH 12472010; 26.01.2011 DE 202011001969 U
(43) Veröffentlichungstag der Anmeldung: 01.02.2012
(73) Patentinhaber: Vanotech Sagl, 6648 Minusio (CH)
(72) Erfinder: Futterknecht, Norbert, 6648 Minusio (CH); Kaufmann-Jinoian, 4332 Stein (CH)
(74) Vertreter: Rüfenacht, Philipp Michael

(56) Entgegenhaltungen:
- WO-A1-2006/019225
- WO-A2-2006/138353
- FR-A1- 2 908 629
- US-A1- 2003 036 035

## Beschreibung

### Technisches Gebiet

Die Erfindung betrifft ein Verfahren zur Herstellung von zahnimplantatgetragenem Zahnersatz im zahntechnischen Labor, wobei das Hilfsteil eine im Wesentlichen glatte Aussenfläche und eine einem Zahnimplantat entsprechende Verbindungsgeometrie für Zahnersatz aufweist.

### Stand der Technik

Bei der Herstellung von zahnimplantatgetragenem Zahnersatz (Suprakonstruktionen wie Kronen, Brücken oder Prothesen) wird in der Regel zunächst ein Modell des betroffenen Kiefers oder Kieferbereichs angefertigt, z. B. aus Hartgips. Zumindest bei komplexeren Arbeiten wird das Modell als Sägemodell bereitgestellt, d. h. das Modell wird zersägt, wobei die einzelnen Teile später bei Bedarf wieder passend aneinandergefügt werden können, z. B. indem sie an den entsprechenden Stellen auf den Modellsockel gesetzt werden können.

Die Zahnimplantate weisen an ihrem proximalen, d. h. der anzubringenden Suprakonstruktion zugewandten Ende, definierte (je nach Hersteller unterschiedliche) Verbindungsgeometrien auf, welche die feste Anbringung der Suprakonstruktion (direkt oder über Implantatpfosten erlauben). In der Regel umfassen die Verbindungsgeometrien u. a. Innengewinde.

Um nun mit Hilfe des Modells die Suprakonstruktion herstellen zu können, werden in das Modell herkömmlich Modellimplantate oder Stahldübel (Retentionen) eingegossen, die im Modell fest verankert sind, den Platz des Implantats einnehmen und eine Verbindungsgeometrie zur Verfügung stellen, welche derjenigen des Implantats (oder gegebenenfalls direkt der Implantatpfosten) entspricht. Durch Herstellung des Sägemodells können die im Gipsmodell eingebetteten Retentionen einzeln zur Herstellung der entsprechenden Suprakonstruktion verwendet werden.

Die US 2003/036035 A1 (C. Chen) zeigt ein solches Modellimplantat (Implantatanalog). Dieses hat ein zulaufendes Ende und einen Positionieransatz am gegenüberliegenden Ende, weiter ein Anschlussgewinde und eine Abflachung oder eine Nut zur Rotationssicherung. Bei einer weiteren Ausführungsform ist eine unverlierbar im Modell befestigbare Manschette zur Aufnahme des Analogs vorgesehen.

Weitere Implantatanaloge sind aus der WO 2006/138353 A2 (Zimmer Dental) bekannt. So ist darin beispielsweise ein Implantatanalog gezeigt, welches umlaufende Retentionsnuten aufweist, durch welche das Analog im Abguss- bzw. Modellmaterial festgehalten wird. Die Verbindungsgeometrie wird durch einen abgeschrägten koronalen Abschnitt realisiert. Sie entspricht derjenigen eines entsprechenden Zahnimplantats. Eine Markierung ist auf einer ebenen Fläche angebracht, welche durch eine Abflachung der Aussenfläche erreicht wird, entsprechend wird am hinteren Ende dieser Abflachung eine Stufe gebildet. Ein Austrittsabschnitt ist konisch. Zur Herstellung des Gebissmodells wird das Analog jeweils mit einer Kappe im Abguss des Patientengebisses verbunden und anschliessend das Modell abgegossen.

Die Verwendung eines Sägemodells birgt Fehlerquellen, so entstehen durch die Anbringung der einzelnen Teile am Modellsockel Ungenauigkeiten. Die Herstellung eines Sägemodells ist zudem aufwendig und teuer.

### Darstellung der Erfindung

Aufgabe der Erfindung ist es, ein dem eingangs genannten technischen Gebiet zugehörendes Verfahren zur Herstellung von zahnimplantatgetragenem Zahnersatz zu schaffen, welches eine präzise und einfache Herstellung von zahnimplantatgetragenem Zahnersatz ermöglicht.

Die Lösung der Aufgabe ist durch die Merkmale des Anspruchs 1 definiert. Gemäss der Erfindung umfasst das Verfahren folgende Schritte:
a) Herstellen eines Modells eines betroffenen Kiefers oder Kieferbereichs;
b) Einsetzen eines zahnmedizinischen Hilfsteils in das Modell, wobei eine Position und Orientierung des Hilfsteils einer Position und Orientierung eines einzusetzenden Zahnimplantats entspricht, wobei das Hilfsteil eine im Wesentlichen glatte Aussenfläche und eine einem Zahnimplantat entsprechende Verbindungsgeometrie für den Zahnersatz aufweist und in einer Aufnahme des Modells passend gehalten ist,
   wobei
   das zahnmedizinische Hilfsteil einen Retentionsnocken umfasst, welcher distal am Hilfsteil angeordnet ist, wobei zwischen einem Basisabschnitt und dem Retentionsnocken ein hinterschnittener Bereich ausgebildet ist;
c) Entfernen des Retentionsnockens vom Hilfsteil ausgehend von einer distalen Seite des Modells;
d) Herausziehen des zahnmedizinischen Hilfsteils.

Das Hilfsteil ermöglicht eine präzise Herstellung und Simulation von zahnimplantatgetragenen Arbeiten im zahntechnischen Labor. Das Hilfsteil kann dem Modell grundsätzlich wieder entnommen und passend wieder in dieses eingesetzt werden. Auch wenn das zahnmedizinische Hilfsteil in das Modell eingegossen wird, kann es später aus dem Modell wieder auf einfache Weise in proximaler Richtung herausgezogen werden. Damit eine Entnahme möglich ist, ist die Aussenfläche im Wesentlichen glatt ausgebildet (weist also kein Gewinde oder Profilierungen auf). Obwohl die Aussenform des Hilfsteils also in der Regel nicht derjenigen des simulierten Implantats entspricht, weist das Hilfsteil - insbesondere an seinem proximalen Ende und bezüglich seiner Innenkontur - die dem Zahnimplantat entsprechende Verbindungsgeometrie für den Zahnersatz auf, so dass dieser passend gefertigt werden kann.

Durch die Entfernbarkeit der einzelnen Hilfsteile (und des gegebenenfalls daran angebrachten Zahnersatzes) kann sich die Herstellung eines Sägemodells erübrigen, wodurch Kosten gespart und die Präzision des Modells erhöht werden können. Insbesondere wird die Parallelitätskontrolle zu weiteren Implantaten sowie die Kontaktpunktanalyse zu Nachbarzähnen verbessert.

Die Geometrie des Hilfsteils ermöglicht nicht nur einen Einsatz im Zusammenhang mit üblichen Gipsmodellen, die durch Ausgiessen eines Abdrucks hergestellt werden, sondern auch mit anderen Modellen, zum einen solchen aus anderen Materialien wie Epoxy, Silikonen, Polyurethanen, Kunstharzen, Metallen usw., zum anderen solchen, die durch andere Verfahren, z. B. Rapid Prototyping-Verfahren wie Stereolithografie (SLA), oder CAD/CAM-Verfahren (z. B. durch Fräsen) hergestellt werden. Dabei kann bereits im Rahmen der Herstellung des Modells eine Aufnahme, insbesondere ein exakt passender Aufnahmeraum, für das Hilfsteil geschaffen werden, wobei die Geometrie der Aufnahme der Position und Orientierung des einzusetzenden Zahnimplantats angepasst ist. Die Geometrie des Hilfsteils ermöglicht - im Gegensatz zu üblichen Retentionen wie Implantatmodellen - das nachträgliche Einsetzen.

Die Herstellung des Modells und die Herstellung der Aufnahme können beide mittels CAD/CAM-Verfahren erfolgen. Bevorzugt erfolgen beide Schritte in einem Arbeitsgang, d. h. die Aufnahmen werden automatisch bei der Herstellung des Modells mit ausgeführt.

Der proximal zum Retentionsnocken ausgebildete Hinterschnitt schafft beim Eingiessen des Hilfsteils eine axial in beiden Richtungen gesicherte Verbindung, so dass das Hilfsteil fest am Modell gehalten ist.

Auch das mit dem Retentionsnocken versehene und beispielsweise in das Modell eingegossene Hilfsteil lässt sich wieder entfernen. Dazu wird vor dem Herausziehen des Hilfsteils der Retentionsnocken ausgehend von einer distalen Seite des Modells vom Hilfsteil entfernt z. B. weggefräst oder abgeschnitten.

Mit Vorteil ist das Hilfsteil aus einer säure- und oxidationsresistenten Metalllegierung gefertigt, z. B. aus einer Neusilberlegierung. Obwohl der Zahnersatz in der Regel kurz nach der Herstellung des Modells und dem Einbringen des Hilfsteils gefertigt wird, müssen die Modelle in der Regel während eines vergleichsweise langen Zeitraums aufbewahrt werden, um bei Bedarf forensische Untersuchungen zu ermöglichen. Eine robuste Legierung stellt sicher, dass das Hilfsteil während diesem Zeitraum nicht degeneriert. Das Material ist so gewählt, dass es sich unter den einwirkenden Kräften, insbesondere einwirkenden Drehmomenten, nur sehr geringfügig verformt, so dass die Präzision nicht beeinträchtigt wird.

Als Alternative zu einer Neusilberlegierung sind andere Materialien möglich, insbesondere andere Metalllegierungen oder Metalle (z. B. Titan oder Aluminium) sowie Hart-Kunststoffe.

Das Hilfsteil kann einmalig oder mehrfach verwendet werden.

Bevorzugt weist die Aussenfläche des Hilfsteils einen konischen Abschnitt auf. Der konische Abschnitt ermöglicht ein axial und radial präzis definiertes Einsetzen des Hilfsteils in eine entsprechende Aufnahme des Modells. Aufgrund der konischen Form ergibt sich eine Abstützung auf einer grossen Fläche, nicht nur beispielsweise auf der Stirnfläche wie bei einem zylindrischen Bolzen. Damit eine Entnahme möglich ist, verjüngt sich der konische Abschnitt in distaler Richtung.

Der hinterschnittene Bereich kann direkt an den konischen Abschnitt anschliessen, oder es können sich weitere Abschnitte zwischen dem konischen Abschnitt und dem hinterschnittenen Bereich befinden, z. B. ein zylindrischer Abschnitt, dessen Querschnitt dem distalen Ende des konischen Abschnitts entspricht.

Bevorzugt weist der konische Abschnitt einen Konuswinkel von 4-10°, insbesondere 5-8°, auf. Dieser Bereich ermöglicht eine sichere Positionierung bei gutem Handling sowie die Bereitstellung der gewünschten Verbindungsgeometrie am proximalen Ende des Hilfsteils. Grundsätzlich sind andere Winkel möglich, wobei die Geometrie des Hilfsteils jeweils zu berücksichtigen ist.

Ein konischer Abschnitt, gegebenenfalls mit einem Konuswinkel im angegebenen Bereich, lassen sich auch im Rahmen eines Hilfsteils realisieren, welches keinen Retentionsnocken aufweist.

Bevorzugt umfasst die Aussenfläche einen proximal an den konischen Abschnitt anschliessenden zylindrischen Abschnitt. Dieser kann insbesondere in seinem Querschnitt dem Querschnitt des zu simulierenden Implantats entsprechen, so dass der konische Abschnitt proximal in einen Abschnitt übergeht, dessen Geometrie derjenigen des Implantats entspricht.

Mit Vorteil weist die Aussenfläche eine Abflachung zur Verdrehsicherung des Hilfsteils auf. Das Hilfsteil hat im Wesentlichen durchgängig einen runden Querschnitt (mit unterschiedlichen Durchmessern), in einem Bereich ist dieser Querschnitt jedoch abgeflacht. Entweder wird das Hilfsteil im Modell eingegossen, so dass eine passende Aufnahme geschaffen wird, oder im Modell wird (z. B. bei der Herstellung durch Rapid Prototyping) vor dem Einsetzen des Hilfsteils eine passende Geometrie geschaffen. In beiden Fällen wirkt die Abflachung an der Aussenfläche des Hilfsteils also mit einer entsprechenden Abflachung des Modells zusammen und verhindert so ein Verdrehen des Hilfsteils um seine Längsachse.

Auch nach dem Entfernen und Wiedereinsetzen des Hilfsteils weist dieses wieder exakt dieselbe Orientierung auf.

Bevorzugt bildet die Abflachung eine ebene Fläche, welche parallel zu einer Längsachse des Hilfsteils verläuft, d. h. die Fläche liegt tangential an einem Umkreis zur Längsachse, wobei der Umkreis einen geringeren Durchmesser aufweist, als der Querschnitt in den angrenzenden Bereichen ohne Abflachung. Im Querschnitt verläuft der Bereich der Abflachung also entlang einer Kreissehne.

Eine derartige Fläche lässt sich leicht herstellen und sie bietet eine zuverlässige Verdrehsicherung gegen eine Verdrehung in beiden Drehrichtungen. Alternativ kann die Abflachung eine andere Geometrie aufweisen: So muss es sich nicht um eine ebene Fläche handeln, sondern kann beispielsweise als gekrümmte Fläche mit unterschiedlichem Krümmungsradius zu den umgebenden Bereichen des Hilfsteils ausgebildet sein oder mehrere Flächen umfassen. Ebenfalls kann die Abflachung schräg zur Längsachse des Hilfsteils verlaufen. Die Geometrie der Abflachung kann auch so gewählt sein, dass die Verdrehsicherung eine der beiden Drehrichtungen bevorzugt.

Vorzugsweise ist die Abflachung mindestens teilweise im konischen Abschnitt ausgebildet. Entsprechend ergibt sich bei geeigneter Form und Orientierung der Fläche, z. B. bei einer ebenen Fläche parallel zur Längsachse, am proximalen Ende der Abflachung eine Stufe. Dieses proximale Ende kann im konischen Abschnitt oder in einem proximal dazu angeordneten, z. B. zylindrischen, Abschnitt liegen. Die Stufe schafft eine Anlagefläche zur präzisen axialen Positionierung des Hilfsteils. Zusammen mit der Abflachung ergibt sich eine präzise Positionierung des Hilfsteils sowohl in axialer Richtung als auch was die Orientierung bezüglich Drehung um die Längsachse angeht.

Die Stufe kann auch anders ausgebildet sein, z. B. unabhängig von der Abflachung, indem der Querschnitt sowohl hinter als auch vor der Stufe kreisförmig ist, sich aber in distaler Richtung sprunghaft verjüngt. Entsprechend kann die Stufe im konischen Abschnitt, aber auch distal oder proximal in einem anders geformten Abschnitt vorhanden sein.

Auch die Abflachung muss nicht zwingend teilweise im konischen Abschnitt ausgebildet sein, sondern kann auch - gemeinsam mit der Stufe oder gesondert von dieser - distal oder proximal gänzlich in einem anders geformten Abschnitt vorhanden sein.

Mit Vorteil bildet die Stufe eine ebene Fläche, welche senkrecht zu einer Längsachse des Hilfsteils verläuft. Diese Geometrie ist einfach herstellbar und gewährleistet eine sichere axiale Abstützung des Hilfsteils unabhängig von an das Hilfsteil angreifenden Drehmomenten. Alternativ kann die Stufe schräg verlaufen, so dass die Abstützung hinsichtlich einer der Drehrichtungen noch verbessert wird.

Mit Vorteil bleibt ein Aussenquerschnitt des Hilfsteils von einem proximalen Ende des Hilfsteils bis zum hinterschnittenen Bereich konstant oder nimmt ab. Dies ermöglicht ein nachträgliches Entfernen des zunächst fest verankerten Hilfsteils aus dem Modell, indem der Retentionsnocken aus distaler Richtung abgetragen, z. B. weggefräst bzw. weggeschliffen wird, bis der hinterschnittene Bereich erreicht ist. Da die proximal daran anschliessenden Bereiche sich in Richtung der proximalen Mündung der Aufnahme für das Hilfsteil erweitern bzw. bereichsweise konstanten Querschnitt haben, lässt sich dann das Hilfsteil problemlos in proximaler Richtung aus dem Modell ausstossen. Es lässt sich auch wieder präzise in seiner Aufnahme positionieren, wonach lediglich eine axiale Sicherung in proximaler Richtung nicht mehr gegeben ist. Hilfsteile mit einer Stufe bieten insofern den Vorteil, dass das Hilfsteil für die präzise axiale Positionierung nicht auf eine Abstützung am distalen Ende des Hilfsteils angewiesen sind - die Entfernung des Retentionsnockens und des umgebenden Materials des Modells beeinflussen die axiale Positionierung deshalb nicht.

Bevorzugt bildet der hinterschnittene Bereich eine Trennstelle zum Entfernen des Retentionsnockens, d. h. falls von Anbeginn keine axiale Sicherung in proximaler Richtung benötigt wird, kann der Retentionsnocken vor dem Eingiessen des Hilfsteils entfernt werden, z. B. durch Abknipsen mit einer Zange im Bereich des hinterschnittenen Bereichs. Dazu ist die Trennstelle mit entsprechend geringem Querschnitt auszubilden. Auch wenn der Retentionsnocken wie vorstehend beschrieben erst nach dem Eingiessen entfernt wird, ergibt sich durch eine klare Ausprägung des hinterschnittenen Bereichs der Vorteil, dass ohne Weiteres erkannt werden kann, wenn der Nocken vollständig abgetragen wurde.

Bevorzugt hat der Retentionsnocken eine im Wesentlichen zylindrische Form. Die Form kann - als Fortsetzung der Abflachung in proximal angeordneten Bereichen - teilweise abgeflacht sein. Dies vereinfacht die Herstellung der Abflachung, schafft jedoch keine Nachteile.

Bei einer zweiten bevorzugten Ausführungsform bleibt ein Aussenquerschnitt des Hilfsteils von einem proximalen Ende des Hilfsteils bis zu einem distalen Ende des Hilfsteils konstant oder nimmt ab. Es fehlt somit ein hinterschnittener Bereich und damit auch ein Retentionsnocken. Hilfsteile gemäss diesen Ausführungsformen können verwendet werden, wenn eine axiale Sicherung in proximaler Richtung nicht gewünscht ist, z. B. bei entsprechend einfacheren Arbeiten, oder wenn sie auf andere Weise stattfindet. Ein Beispiel ist die Verwendung des erfindungsgemässen Hilfsteils zusammen mit einem Modell, das durch Rapid Prototyping hergestellt wurde. In diesem Fall wird das Hilfsteil bevorzugt durch die proximale Mündung in die spezifisch geschaffene Aufnahmeöffnung eingeführt, eine axiale Sicherung am Retentionsnocken wäre somit nicht möglich.

Wie bereits erwähnt, kann der Retentionsnocken im Rahmen der ersten Ausführungsform über eine Trennstelle am Hauptteil des Hilfsteils angebracht sein, so dass sich nach Abtrennen des Retentionsnockens im Wesentlichen ein Hilfsteil gemäss der zweiten Ausführungsform ergibt. Die erste Ausführungsform bietet den Vorteil, dass beim Anwender nicht zwei gesonderte Sortimente an Lager gehalten werden müssen.

Im Einsatz kann das Hilfsteil mit einer Manschette kombiniert werden, die als Hülse ausgebildet ist, welche das Hilfsteil passend aufnehmen kann, d. h. die entsprechenden Profilierungen (z. B. Stufen, Abflachungen usw.) zur genauen Positionierung und Verdrehsicherung aufweist. Die Aufnahme für das Hilfsteil wird also durch Einsetzen oder Eingiessen einer an das Hilfsteil angepassten Manschette geschaffen. Die Manschette kann beispielsweise eingegossen oder in eine durch ein CAD/CAM-Verfahren vorbereitete Aufnahme eingesetzt (und dort ggf. verklebt) werden.

Die Manschette ist bevorzugt als rohrartiger Körper mit konischem Abschnitt ausgebildet und sowohl an ihrem proximalen wie an ihrem distalen Ende offen. Das Hilfsteil kann mit seinem distalen Ende aus der Manschette herausragen und dort (z. B. mit dem Retentionsnocken) im umgebenden Material verankert sein. Der Einsatz einer solchen Manschette ist sowohl bei der Verwendung von üblichem (Hart-)Gips möglich als auch bei der Herstellung von Modellen durch Rapid Prototyping. Im ersten Fall wird die Manschette eingegossen und ist im Material beispielsweise durch entsprechende Aussenprofilierung sicher gehalten. Im zweiten Fall wird die Manschette nach der Herstellung des Modells eingesetzt und beispielsweise verklebt. Die Manschette gewähr!eistet eine präzise Positionierung des Hilfsteils und verhindert eine Beschädigung des umgehenden Modellmaterials. Die Manschette ist wie das Hilfsteil bevorzugt aus einem Metall (z. B. Titan oder Aluminium) oder einer Metalllegierung (z. B. einer Neusilberlegierung) gefertigt, so dass eine äussert präzise Aufnahme des (vorzugsweise ebenfalls metallischen) Hilfsteils ermöglicht wird. Als Alternative sind andere Materialien möglich, z. B. Hart-Kunststoffe.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig.1A: einen Querschnitt einer ersten Ausführungsform eines in einem erfindungsgemässen Verfahren verwendbaren Hilfsteils, durch eine erste Ebene senkrecht zur Abflachung;
- Fig. 1B: eine Seitenansicht des Hilfsteils auf eine zweite Ebene senkrecht zur ersten Ebene.
- Fig. 1C: ein Schrägbild des Hilfsteils;
- Fig.2: eine Seitenansicht einer zweiten Ausführungsform eines in einem erfindungsgemässen Verfahren verwendbaren Hilfsteils; und
- Fig. 3: eine Seitenansicht einer dritten Ausführungsform eines In einem erfindungsgemässen Verfahren verwendbaren Hilfsteils.

Grundsätzlich sind in den Figuren gleiche Teile mit gleichen Bezugszeichen versehen.

### Wege zur Ausführung der Erfindung

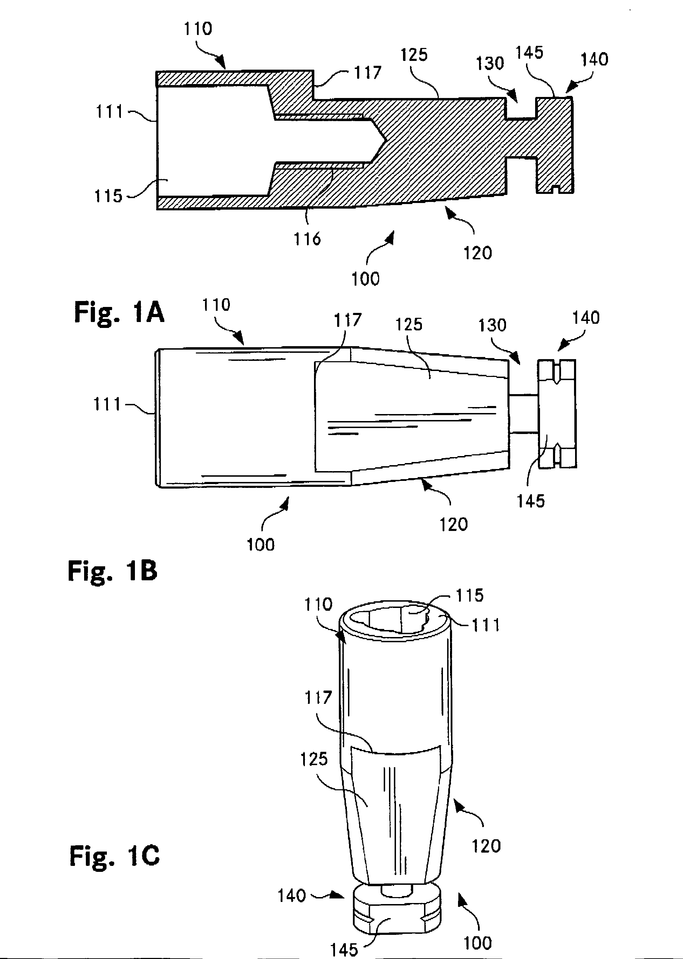

Die Figur 1A zeigt einen Querschnitt einer ersten Ausführungsform eines in einem erfindungsgemässen Verfahren verwendbaren Hilfsteils, durch eine erste Ebene senkrecht zur Abflachung, die Figur 1B zeigt eine Seitenansicht des Hilfsteils auf eine zweite Ebene senkrecht zur ersten Ebene, die Figur 1C zeigt ein Schrägbild des Hiffsteils.

Das Hilfsteil 100 ist einstückig aus einer Neusilberlegierung gefertigt und umfasst am proximalen Ende einen zylindrischen Hauptteil 110. An diesen schliesst sich in distaler Richtung ein konischer Abschnitt 120 an, an diesen wiederum ein hinterschnittener Bereich 130 und an diesen wiederum ein zylindrischer Retentionsnocken 140.

Im Hauptteil 110 und in einem hinteren Bereich des konischen Abschnitts 120 ist eine längs verlaufende Öffnung 115 ausgebildet. Diese mündet in die hintere Stirnfläche 111 des Hauptteils 110, ihre Geometrie entspricht derjenigen eines zu simulierenden Implantats. In einem distalen Bereich der Öffnung 115 ist ein Innengewinde 116 ausgebildet. Da die Geometrie grundsätzlich jedem bekannten Implantatsystem entsprechen kann, ist sie in den Figuren nur schematisch dargestellt.

Der Hauptteil 110, der hinterschnittene Bereich 130 und der Retentionsnocken 140 sind im Wesentlichen kreisrylindrisch, wobei ein Durchmesser des Retentionsnockens 140 dem Durchmesser des konischen Abschnitts 120 an seinem distalen Ende entspricht. Der Durchmesser des Hauptteils 110 beträgt beim dargestellten Beispiel 3.5 mm. Die Durchmesser des Hauptteils 110, des Retentionsnockens 140 und des hinterschnittenen Bereichs 130 verhalten sich ungefähr wie 7:5:3. Die Länge des Hilfsteils 100 beträgt 15 mm (Hauptteil: 6.8 mm, konischer Abschnitt: 8.2 mm, hinterschnittener Bereich: 1.0 mm, Retentionsnocken 1.5 mm). Der Konuswinkel des konischen Abschnitts 120 beträgt somit ca. 5°.

Im konischen Abschnitt 120 sowie im zylindrischen Hauptteil 110 ist eine Abflachung 125 ausgebildet. Diese bildet eine ebene Fläche, welche parallel zur Längsachse des Hilfsteils 100 verläuft. An ihrem proximalen Ende, welches im Hauptteil 110, gut ein Viertel der Länge des Hauptteils 110 hinter dem Übergang zum konischen Abschnitt 120, angeordnet ist, bildet die Abflachung 125 eine Stufe 117 in Form einer ebenen Fläche, die senkrecht zur Längsachse orientiert ist. Die Abflachung 125 setzt sich in derselben Ebene fort im Retentionsnocken 140 als Abflachung 145. Dies ermöglicht eine einfache Herstellung der Abflachung 125, 145, indem dazu eine einzige ebene Fräsung vom distalen Ende des Hilfsteils 100 her ausreicht.

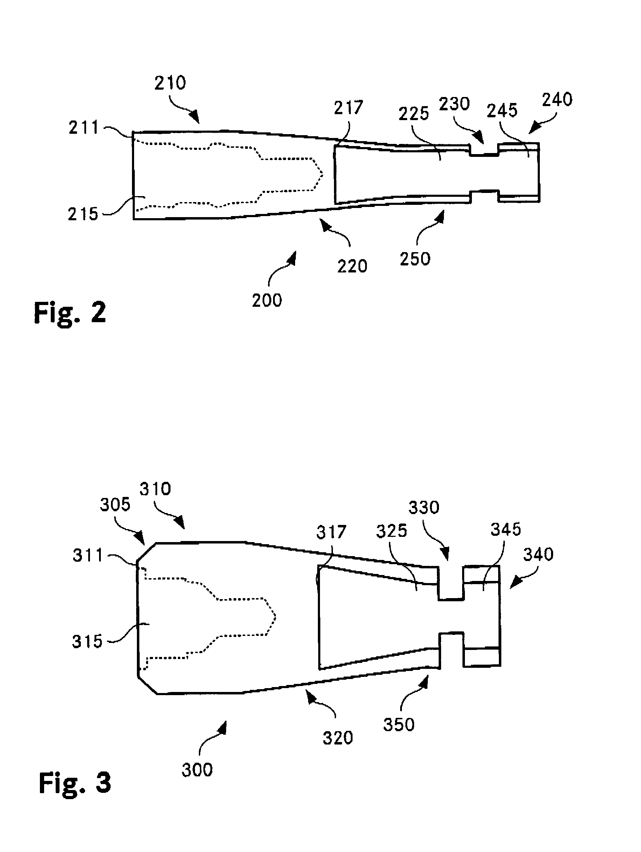

Die Figur 2 zeigt eine Seitenansicht einer zweiten Ausführungsform eines in einem erfindungsgemässen Verfahren verwendbaren Hilfsteils.

Das Hilfsteil 200 ist einstückig aus einer Neusilberlegierung gefertigt und umfasst am proximalen Ende einen zylindrischen Hauptteil 210. An diesen schliesst sich in distaler Richtung ein konischer Abschnitt 220 an, an diesen ein weiterer zylindrischer Abschnitt 250, dann ein hinterschnittener Bereich 230 und an diesen wiederum ein zylindrischer Retentionsnocken 240.

Im Hauptteil 210 und in einem hinteren Bereich des konischen Abschnitts 220 ist eine längs verlaufende Öffnung 215 ausgebildet. Diese mündet in die hintere Stirnfläche 211 des Hauptteils 210, ihre Geometrie entspricht derjenigen eines zu simulierenden Implantats. Da die Geometrie grundsätzlich jedem bekannten Implantatsystem entsprechen kann, ist sie in der Figur nur schematisch dargestellt.

Der Hauptteil 210, der zylindrische Abschnitt 250, der hinterschnittene Bereich 230 und der Retentionsnocken 240 sind im Wesentlichen kreiszylindrisch, wobei der konische Abschnitt 220 im dargestellten Querschnitt ohne Sprung in den zylindrischen Abschnitt 220 übergeht und ein Durchmesser des Retentionsnockens 240 dem Durchmesser des zylinderischen Abschnitts 220 entspricht. Der Durchmesser des Hauptteils 210 beträgt beim dargestellten Beispiel 3.3 mm. Die Durchmesser des Hauptteils 210, des zylindrischen Abschnitts 250 und des Retentionsnockens 240 verhalten sich ungefähr wie 5:3:2. Die Länge des Hilfsteils 200 beträgt 15 mm (Hauptteil: 3.7 mm, konischer Abschnitt: 6.3 mm, zylindrischer Abschnitt: 2.5mm, hinterschnittener Bereich: 1.0 mm, Retentionsnocken 1.5 mm). Der Konuswinkel des konischen Abschnitts 220 beträgt somit ca. 5°.

Im konischen Abschnitt 220 sowie im zylindrischen Abschnitt 250 ist eine Abflachung 225 ausgebildet. Diese bildet eine ebene Fläche, welche parallel zur Längsachse des Hilfsteils 200 verläuft. An ihrem proximalen Ende, welches im konischen Abschnitt 220, ungefähr 2/5 der Länge des konischen Abschnitts 220 hinter dem Übergang zum zylindrischen Abschnitt 250, angeordnet ist, bildet die Abflachung 225 eine Stufe 217 in Form einer ebenen Fläche, die senkrecht zur Längsachse orientiert ist. Die Abflachung 225 setzt sich in derselben Ebene fort im Retentionsnocken 240 als Abflachung 245. Dies ermöglicht eine einfache Herstellung der Abflachung 225, 245, indem dazu eine einzige ebene Fräsung vom distalen Ende des Hilfsteils 200 her ausreicht.

Die Figur 3 zeigt eine Seitenansicht einer dritten Ausführungsform eines in einem erfindungsgemässen Verfahren verwendbaren Hilfsteils.

Das Hilfsteil 300 ist einstückig aus einer Neusilberlegierung gefertigt und umfasst am proximalen Ende einen konischen Abschnitt 305, an welchen sich in distaler Richtung ein zylindrischer Hauptteil 310 anschliesst. An diesen schliesst sich in distaler Richtung wiede rum ein konischer Abschnitt 320 an, an diesen ein weiterer zylindrischer Abschnitt 350, dann ein hinterschnittener Bereich 330 und an diesen wiederum ein zylindrischer Retentionsnocken 340.

Im konischen Abschnitt 305, im Hauptteil 310 und in einem hinteren Bereich des konischen Abschnitts 320 ist eine längs verlaufende Öffnung 315 ausgebildet. Diese mündet in die hintere Stirnfläche 311 des Hauptteils 310, ihre Geometrie entspricht derjenigen eines zu simulierenden Implantats. Da die Geometrie grundsätzlich jedem bekannten lmplantatsystem entsprechen kann, ist sie in der Figur nur schematisch dargestellt.

Der Hauptteil 310, der zylindrische Abschnitt 350, der hinterschnittene Bereich 330 und der Retentionsnocken 340 sind im Wesentlichen kreiszylindrisch, wobei der konische Abschnitt 320 im dargestellten Querschnitt ohne Sprung in den zylindrischen Abschnitt 320 übergeht und ein Durchmesser des Retentionsnockens 340 dem Durchmesser des zylindrischen Abschnitts 320 entspricht. Der Durchmesser des Hauptteils 310 beträgt beim dargestellten Beispiel 6.5 mm. Die Durchmesser des Hauptteils 310, des zylindrischen Abschnitts 350 und des Retentionsnockens 340 verhalten sich ungefähr wie 9:6:2. Die Länge des Hilfsteils 300 beträgt 15 mm (proximaler konischer Abschnitt 305: 0.8mm, Hauptteil: 3.4 mm, konischer Abschnitt: 7.8 mm, zylindrischer Abschnitt: 0.5mm, hinterschnittener Bereich: 1.0 mm, Retentionsnocken 1.5 mm). Der Konuswinkel des konischen Abschnitts 320 beträgt somit ca. 8°.

Im konischen Abschnitt 320 sowie im zylindrischen Abschnitt 350 ist eine Abflachung 325 ausgebildet. Diese bildet eine ebene Fläche, welche parallel zur Längsachse des Hilfsteils 300 verläuft. An ihrem proximalen Ende, welches im konischen Abschnitt 320, knapp die Hälfte der Länge des konischen Abschnitts 320 hinter dem Übergang zum zylindrischen Abschnitt 350, angeordnet ist, bildet die Abflachung 325 eine Stufe in Form einer ebenen Fläche, die senkrecht zur Längsachse orientiert ist. Die Abflachung 325 setzt sich in derselben Ebene fort im Retentionsnocken 340 als Abflachung 345. Dies ermöglicht eine einfache Herstellung der Abflachung 325, 345, indem eine einzige ebene Fräsung vom distalen Ende des Hilfsteils 300 her ausreicht.

Die Erfindung ist nicht auf die dargestellten Ausführungsbeispiele beschränkt. Das Material, die Dimensionen und auch die Geometrie des Hilfsteils können anders gewählt sein, insbesondere können mehr oder weniger aneinander anschliessende Abschnitte vorhanden oder andere Dimensionsverhältnisse gewählt sein. Insbesondere muss sich die Abflachung nicht in den Retentionsnocken erstrecken, sie muss sich auch nicht bis zum vorderen Ende des proximal an den hinterschnittenen Bereich anschliessenden Abschnitts erstrecken.

Zusammenfassend ist festzustellen, dass durch die Erfindung ein Vefahren zur Herstellung von zahnimplantatgetragenem Zahnersatz geschaffen wird, welches eine präzise und einfache Herstellung von zahnimplantatgetragenem Zahnersatz ermöglicht.

## Patentansprüche

1. Verfahren zur Herstellung von zahnimplantatgetragenem Zahnersatz, welches folgende Schritte umfasst:
a) Herstellen eines Modells eines betroffenen Kiefers oder Kieferbereichs; und
b) Einsetzen eines zahnmedizinischen Hilfsteils in das Modell, wobei eine Position und Orientierung des Hilfsteils einer Position und Orientierung eines einzusetzenden Zahnimplantats entspricht, wobei das Hilfsteil eine im Wesentlichen glatte Aussenfläche und eine einem Zahnimplantat entsprechende Verbindungsgeometrie (115; 215; 315) für den Zahnersatz aufweist und in einer Aufnahme des Modells passend gehalten ist, wobei das zahnmedizinische Hilfsteil einen Retentionsnocken (140; 240; 340) umfasst, welcher distal am Hilfsteil (100; 200; 300) angeordnet ist, wobei zwischen einem Basisabschnitt und dem Retentionsnocken (140; 240; 340) ein hinterschnittener Bereich (130; 230; 330) ausgebildet ist; **gekennzeichnet durch** die weiteren Schritte
c) Entfernen des Retentionsnockens vom Hilfsteil ausgehend von einer distalen Seite des Modells; und
d) Herausziehen des zahnmedizinischen Hilfsteils.

2. Verfahren nach Anspruch 1, **dadurch gekennzeichnet, dass** der hinterschnittene Bereich eine Trennstelle zum Entfernen des Retentionsnockens bildet

3. Verfahren nach Anspruch 1 oder 2, wobei vor dem Einsetzen des Hilfsteils im Modell eine Aufnahme für das Hilfsteil geschaffen wird, wobei eine Geometrie der Aufnahme der Position und Orientierung des einzusetzenden Zahnimplantats angepasst ist;

4. Verfahren nach Anspruch 3, **dadurch gekennzeichnet, dass** die Herstellung des Modells und das Herstellen der Aufnahme mittels CAD/CAM-Verfahren erfolgt, insbesondere in einem Arbeitsgang.

5. Verfahren nach Anspruch 3 oder 4, **dadurch gekennzeichnet, dass** die Aufnahme durch Einsetzen oder Eingiessen einer an das Hilfsteils angepassten Manschette geschaffen wird.

6. Verfahren nach einem der Ansprüche 1 bis 5, **dadurch gekennzeichnet, dass** das zahnmedizinische Hilfsteil in das Modell eingegossen wird und dass das zahnmedizinische Hilfsteil später aus dem Modell in proximaler Richtung herausgezogen wird.

7. Verfahren nach einem der Ansprüche 1 bis 6, **dadurch gekennzeichnet, dass** die Aussenfläche des Hilfsteils einen konischen Abschnitt (120; 220; 320) aufweist.

8. Verfahren nach Anspruch 7, **dadurch gekennzeichnet, dass** der konische Abschnitt (120; 220; 320) einen Konuswinkel von 4-10°, insbesondere 5-8°, aufweist.

9. Verfahren nach Anspruch 7 oder 8, **dadurch gekennzeichnet, dass** die Aussenfläche des Hilfsteils einen proximal an den konischen Abschnitt (120; 220; 320) anschliessenden zylinderischen Abschnitt (110; 210; 310) umfasst.

10. Verfahren nach einem der Ansprüche 1 bis 9, **dadurch gekennzeichnet, dass** die Aussenfläche des Hilfsteils eine Abflachung (125; 225; 325) zur Verdrehsicherung des Hilfsteils (100; 200; 300) aufweist.

11. Verfahren nach einem der Ansprüche 1 bis 10, **dadurch gekennzeichnet, dass** die Aussenfläche des Hilfsteils eine Stufe (117; 217; 317) zur axialen Positionierung des Hilfsteils (100; 200; 300) aufweist.

12. Verfahren nach einem der Ansprüche 1 bis 11, **dadurch gekennzeichnet, dass** ein Aussenquerschnitt des Hilfsteils (100; 200; 300) von einem proximalen Ende des Hilfsteils (100; 200; 300) bis zum hinterschnittenen Bereich (130; 230; 330) konstant bleibt oder abnimmt.

13. Verfahren nach einem der Ansprüche 1 bis 12, **dadurch gekennzeichnet, dass** der Retentionsnocken (140; 240; 340) eine im Wesentlichen zylindrische Form hat.

## Claims

1. A method for the production of dental implant-carried dentures, which comprises the following steps:
a) production of a model of an affected jaw or jaw region; and
b) insertion of a dental accessory into the model, a position and orientation of the accessory corresponding to a position and orientation of a dental implant to be inserted, the accessory having an essentially smooth outer face and a connection geometry (115; 215; 315), corresponding to a dental implant, for the dentures and being held in the receptacle so as to fit, whereas the dental accessory comprises a retention boss (140; 240; 340) which is arranged distally on the accessory (100; 200; 300), an undercut region (130; 230; 330) being formed between a base portion and the retention boss (140; 240; 340),
**characterized by** the further steps of:
c) removing the retention boss from the accessory, starting from a distal side of the model; and
d) drawing out the dental accessory.

2. The method as recited in Claim 1, **characterized in that** undercut region forms a parting point for the removal of the retention boss.

3. The method as recited in Claim 1 or 2, a receptacle for the accessory being provided before the accessory is inserted in the model, a geometry of the receptacle being adapted to the position and orientation of the dental implant to be inserted.

4. The method as recited in Claim 3, **characterized in that** the production of the model and the production of the receptacle are carried out by means of CAD/CAM methods, in particular in one operation.

5. The method as recited in Claim 3 or 4, **characterized in that** the receptacle is provided by the insertion or casting of a cuff adapted to the accessory.

6. The method as recited in one of Claims 1 to 5, **characterized in that** the dental accessory is cast into the model, and **in that** the dental accessory is subsequently drawn out of the model in the proximal direction.

7. The method as recited in one of Claims 1 to 6, **characterized in that** the outer face of the accessory has a conical portion (120; 220; 320).

8. The method as recited in Claim 7, **characterized in that** the conical portion has a cone angle of 4-10°, in particular 5-8°.

9. The method as recited in Claim 7 or 8, **characterized in that** the outer face comprises a cylindrical portion (110; 210; 310) proximally adjoining the conical portion (120; 220; 320).

10. The method as recited in one of Claims 1 to 9, **characterized in that** the outer face of the accessory has a flattening (125; 225; 325) for securing the accessory (100; 200; 300) against twisting.

11. The method as recited in one of Claims 1 to 10, **characterized in that** the outer face of the accessory has a step (117; 217; 317) for the axial positioning of the accessory (100; 200; 300).

12. The method as recited in one of Claims 1 to 11, **characterized in that** an outer cross section of the accessory (100; 200; 300) remains constant or decreases from a proximal end of the accessory (100; 200; 300) as far as the undercut region (130; 230; 330).

13. The method as recited in one of Claims 1 to 12, **characterized in that** the retention boss (140; 240; 340) has an essentially cylindrical form.

## Revendications

1. Procédé pour la fabrication de prothèses dentaires montées sur des implants dentaires, qui comprend les étapes suivantes :
a) fabrication d'un modèle d'une mâchoire ou d'une région de mâchoire concernée ; et
b) insertion d'une pièce dentaire auxiliaire dans le modèle, dans lequel une position et une orientation de la pièce auxiliaire correspondent à une position et une orientation d'un implant dentaire à insérer, dans lequel la pièce auxiliaire présente une face extérieure essentiellement lisse et une géométrie de liaison (115 ; 215 ; 315) correspondant à un implant dentaire pour la prothèse dentaire et est maintenue de manière ajustée dans un logement du modèle, dans lequel la pièce dentaire auxiliaire comprend un taquet de retenue (140 ; 240 ; 340), qui est disposé en position distale sur la pièce auxiliaire (100 ; 200 ; 300), dans lequel une région en contre-dépouille (130 ; 230 ; 330) est formée entre une partie de base et le taquet de retenue (140 ; 240 ; 340) ;
**caractérisé par** les étapes suivantes :
c) enlèvement du taquet de retenue de la pièce auxiliaire en partant du côté distal du modèle ; et
d) extraction de la pièce dentaire auxiliaire.

2. Procédé selon la revendication 1, **caractérisé en ce que** la région en contre-dépouille forme une zone de séparation pour l'enlèvement du taquet de retenue.

3. Procédé selon la revendication 1 ou 2, dans lequel, avant l'insertion de la pièce auxiliaire dans le modèle, on crée un logement pour la pièce auxiliaire, dans lequel une géométrie du logement est adaptée à la position et à l'orientation de l'implant dentaire à insérer.

4. Procédé selon la revendication 3, **caractérisé en ce que** l'on effectue la fabrication du modèle et la fabrication du logement au moyen d'un procédé CAO/FAO, en particulier en une seule opération.

5. Procédé selon la revendication 3 ou 4, **caractérisé en ce que** l'on crée le logement par insertion ou coulée d'une manchette adaptée à la pièce auxiliaire.

6. Procédé selon l'une quelconque des revendications 1 à 5, **caractérisé en ce que** l'on coule la pièce dentaire auxiliaire dans le modèle et **en ce que** l'on retire ultérieurement la pièce dentaire auxiliaire hors du modèle en direction proximale.

7. Procédé selon l'une quelconque des revendications 1 à 6, **caractérisé en ce que** la face extérieure de la pièce auxiliaire présente une partie conique (120 ; 220 ; 320).

8. Procédé selon la revendication 7, **caractérisé en ce que** la partie conique (120 ; 220 ; 320) présente une conicité de 4-10°, en particulier de 5-8°.

9. Procédé selon la revendication 7 ou 8, **caractérisé en ce que** la face extérieure de la pièce auxiliaire comprend une partie cylindrique (110 ; 210 ; 310) se raccordant côté proximal à la partie conique (120 ; 220 ; 320).

10. Procédé selon l'une quelconque des revendications 1 à 9, **caractérisé en ce que** la face extérieure de la pièce auxiliaire présente un méplat (125 ; 225 ; 325) pour protéger la pièce auxiliaire (100 ; 200 ; 300) contre la rotation.

11. Procédé selon l'une quelconque des revendications 1 à 10, **caractérisé en ce que** la face extérieure de la pièce auxiliaire présente un gradin (117 ; 217 ; 317) pour le positionnement axial de la pièce auxiliaire (100 ; 200 ; 300).

12. Procédé selon l'une quelconque des revendications 1 à 11, **caractérisé en ce qu'**une section transversale extérieure de la pièce auxiliaire (100 ; 200 ; 300) reste constante ou diminue depuis une extrémité proximale de la pièce auxiliaire (100 ; 200 ; 300) jusqu'à la région en contre-dépouille (130 ; 230 ; 330).

13. Procédé selon l'une quelconque des revendications 1 à 12, **caractérisé en ce que** le taquet de retenue (140 ; 240 ; 340) présente une forme essentiellement cylindrique.
